(19) Europäisches Patentamt
European Patent Office
Office européen des brevets

(11) **EP 1 327 959 B1**

(12) # EUROPÄISCHE PATENTSCHRIFT

(45) Veröffentlichungstag und Bekanntmachung des Hinweises auf die Patenterteilung:
**27.09.2006 Patentblatt 2006/39**

(51) Int Cl.:
***G06N 3/04*** *(2006.01)*

(21) Anmeldenummer: **03000228.1**

(22) Anmeldetag: **08.01.2003**

(54) **Neuronales Netz zur Modellierung eines physikalischen Systems sowie Verfahren zur Bildung eines solchen neuronalen Netzes**

Neural network for modelling a physical system and method for building the neural network

Réseau neuronal pour modéliser un système physique et procédé de construction de ce réseau neuronal

(84) Benannte Vertragsstaaten:
**AT BE BG CH CY CZ DE DK EE ES FI FR GB GR HU IE IT LI LU MC NL PT SE SI SK TR**

(30) Priorität: **11.01.2002 DE 10201018**

(43) Veröffentlichungstag der Anmeldung:
**16.07.2003 Patentblatt 2003/29**

(73) Patentinhaber: **EADS Deutschland GmbH**
**85521 Ottobrunn (DE)**

(72) Erfinder: **Seifert, Jost**
**83727 Schliersee (DE)**

(56) Entgegenhaltungen:
**US-A- 5 095 443**

- **N.T. RUSSEL, H.H.C. BAKKER: "Modular modelling of an evaporator for long-range prediction " ARTIFICIAL INTELLIGENCE IN ENGINEERING , Bd. 11, Nr. 4, Oktober 1997 (1997-10), Seiten 347-355, XP002265624 UK**
- **CHONG-HO CHOI ET AL: "Partially trained neural networks based on partition of unity" PROCEEDINGS OF THE INTERNATIONAL JOINT CONFERENCE ON NEURAL NETWORKS. (IJCNN). BALTIMORE, JUNE 7 - 11, 1992, NEW YORK, IEEE, US, Bd. 3, 7. Juni 1992 (1992-06-07), Seiten 811-816, XP010059836 ISBN: 0-7803-0559-0**
- **WATANABE K ET AL: "Incipient diagnosis of multiple faults in chemical processes via hierarchical artificial neural network" PROCEEDINGS OF THE INTERNATIONAL CONFERENCE ON INDUSTRIAL ELECTRONICS, CONTROL AND INSTRUMENTATION (IECON). KOBE, OCT. 28 - NOV. 1, 1991, NES YORK, IEEE, US, Bd. 1 CONF. 17, 28. Oktober 1991 (1991-10-28), Seiten 1500-1505, XP010041921 ISBN: 0-87942-688-8**
- **HASHEM S ET AL: "Optimal linear combinations of neural networks: an overview" NEURAL NETWORKS, 1994. IEEE WORLD CONGRESS ON COMPUTATIONAL INTELLIGENCE., 1994 IEEE INTERNATIONAL CONFERENCE ON ORLANDO, FL, USA 27 JUNE-2 JULY 1994, NEW YORK, NY, USA,IEEE, 27. Juni 1994 (1994-06-27), Seiten 1507-1512, XP010127430 ISBN: 0-7803-1901-X**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 327 959 B1

## Beschreibung

Die Erfindung betrifft ein neuronales Netz zur Modellierung eines physikalischen Systems mit Hilfe eines Computer-Programmsystems zur Systemidentifizierung sowie ein Verfahren zur Bildung eines solchen neuronalen Netzes, wobei die Erfindung auf physikalische Systeme anwendbar ist, die dynamisch veränderlich sind.
Als Systeme kommen demgemäss im Raum bewegliche Objekte wie Fahrzeuge und insbesondere Flugzeuge sowie Systeme mit dynamischen Prozessen wie Reaktoren oder Kraftwerke oder chemische Prozesse in Betracht. Die Erfindung ist insbesondere anwendbar bei der Modellierung von Fahrzeugen und insbesondere Luftfahrzeugen unter Verwendung von aerodynamischen Beiwerten.
Bei der Systemidentifizierung zur Bildung von analytischen Modellen eines physikalischen Systems ist das Verhalten eines mit dessen Ein- und Ausgängen möglichst genau nachzubilden, um es beispielsweise zur Simulation und weiteren Untersuchung des physikalischen Systems zu verwenden. Das analytische Modell ist ein mathematisches Modell des nachzubildenden physikalischen Systems und soll möglichst ähnliche Ausgabewerte produzieren wie das echte System, bei den gleichen Eingabewerten. Zur Modellierung des physikalischen Systems werden üblicherweise benötigt:

- Messwertepaare der Ein- und Ausgänge,
- eine Modellstruktur,
- ein Verfahren zur Kennwertermittlung,
- bei einigen Verfahren geschätzte Anfangswerte für die Kennwerte.

Zur Simulation von Luftfahrzeugen unter Verwendung von aerodynamischen Beiwerten ist eine Bestimmung von aerodynamischen Beiwerten erforderlich, die nach dem Stand der Technik nach der sogenannten "Equation Error Methode" und der sogenannten "Output Error Methode" erfolgt.
Bei diesen Verfahren wird das Systemverhalten mittels linearer Zusammenhänge nachgebildet, wobei üblicherweise die Annahmen einer exakten Modellkenntnis und einer störungsfreien Messung getroffen werden. Diese Verfahren haben folgende Nachteile:

- Es wird üblicherweise ein lineares Verhalten um einen Anfangszustand vorausgesetzt. Konsequenterweise fällt es schwer, ein hochdynamisches Verhalten eines Systems korrekt nachzubilden, da zustandsabhängige Kennwerte nicht mehr mit dem Anfangszustand in einem linearen Zusammenhang stehen.
- Es können nur für einzelne Abschnitte der Messwerte (z.B. Flugzeugmanöver) die relevanten Kennwerte identifiziert werden. Dadurch entsteht ein hoher Aufwand in der Datenverarbeitung.
- Ein Konvergieren der Verfahren kann durch die Empfindlichkeit auf verrauschte Messdaten behindert werden.

Als Alternative zu diesen etablierten Verfahren sind neuronale Netze zur System-Modellierung verwendet worden. Die dabei angewendeten mehrschichtigen vorwärtsgerichteten Netze erhält das Netz aufgrund des relativ hohen Grades an Vernetzung der Neuronen einen Black Box -Charakter, wodurch ein Kennwert des modellierten Systems nicht lokalisierbar ist. Das heißt, dass interne Größen des Netzes nicht bestimmten physikalischen Effekten zugeordnet werden können, wodurch diese auch nicht im einzelnen analysiert werden können. Derartige Analysen sind jedoch wichtig, um Aussagen über die generelle Gültigkeit des Gesamtmodells treffen zu können. Aufgrund dieses Black Box Charakters sind neuronale Netze zur Systemidentifizierung bisher nicht verwendet worden.
Aus dem Aufsatz von Russel, Bakker: "Modular modelling of an evaporator for long-range prediction" in Artificial Intelligence in Engineering, Vol. 11 (1997), S. 347-355 ist ein neuronales Netz für einen Verdampfer zur Verwendung für ein Steuerungssystem bekannt. Dabei werden Sub-Netzwerke verwendet, die jeweils spezifische Elemente des Verdampfers modellieren.
Die US 5 095 443 A offenbart ein neuronales Netzwerk mit Eingangs-Einheit, einer Mehrzahl von neuronalen Netzen und einer Ausgangs-Einheit zur Ausgabe der Lern-Resultate. Die US 5 095 443 A offenbart weiterhin ein Trainsingsverfahren, bei dem abhängig vom Lernfortschritt mehrere Teil-Netzwerke hinzugenommen oder weggelassen werden können.
Es ist die Aufgabe der Erfindung, ein neuronales Netz zur Modellierung eines physikalischen Systems mit Hilfe eines Computer-Programmsystems zur Systemidentifizierung sowie ein Verfahren zu dessen Erstellung zu schaffen, das robust ist und die Ermittlung von Kennwerten des modellierten Systems erlaubt.
Diese Aufgabe wird mit den Merkmalen der unabhängigen Ansprüche gelöst. Weitere Ausführungsformen sind in deren Unteransprüchen beschrieben.
Erfindungsgemäß ist ein neuronales Netz zur Abbildung einer ein physikalisches System beschreibenden Ausgangsfunktion aus miteinander verbundenen Neuronen vorgesehen, denen jeweils eine Übergangsfunktion zugeordnet ist, um den aus dieser jeweils ermittelten Ausgangswert dem in Längsrichtung des Netzes als nächsten verbundenen Neuron als Eingangswert zu übertragen, wobei die Verknüpfungen der Neuronen nur innerhalb einer von zumindest zwei in Querrichtung und zwischen einer Eingangsschicht und einer Ausgangsschicht angeordneten Gruppen von Neuronen vorgesehen sind, wobei die Gruppen zumindest zwei in Längsrichtung hintereinander angeordnete Zwischenschichten mit zumindest einem Neuron aufweisen. Insbesondere sind die Teilfunktions-Koeffizienten in Form von untrainierbaren Verbindungen zwischen einer Neuronengruppe und den Ausgabe-Neuronen des gesamten Neuronalen Netzes berücksichtigt und sind als Verbindungen zwischen der Eingangsschicht und jeder Gruppe untrainierbare Eingabeverbindungen vorgesehen.

Durch die erfindungsgemäße Struktur des vorgesehenen neuronalen Netzes ist es möglich, einzelnen Neuronen bestimmte physikalische Effekte zuzuordnen, was bei der fehlenden systembeschreibenden Modellstruktur mit neuronalen Netzen nach dem Stand der Technik nicht möglich ist. Gegenüber der "Equation Error Methode" und der "Output Error Methode" gewährleistet das erfindungsgemäße neuronale Netz eine größere Robustheit gegenüber verrauschten Messdaten und bietet darüber hinaus den Vorteil, dass Funktionen zur Beschreibung des zu modellierenden'Systems generalisiert werden können, wodurch eine verbesserte Handhabung der Erfindung bei der Anwendung auf ähnliche Systeme möglich ist.

Erfindungsgemäß ist zur Bildung von analytischen Modellen physikalischer Systeme ein neuronales Netz vorgesehen, wobei die dynamischen und physikalischen Zusammenhänge des Systems durch eine Netzstruktur abgebildet werden. Dabei wird vorausgesetzt, dass sich die Ausgabe des Systems aus einer Summe von mehreren Anteilen (mindestens zwei) zusammensetzt, die aus den Eingabegrößen berechnet werden. Für jeden Anteil kann ein physikalischer Effekt (z.B. die Dämpfung eines Systems) definiert werden.

Das erfindungsgemäße Verfahren hat folgende Vorteile: Durch die erfindungsgemäße Verwendung von neuronalen Netzen wird eine Robustheit gegenüber verrauschten Messdaten erreicht und das analytische Modell ist nicht beschränkt auf lineare Zusammenhänge zur Systembeschreibung, da Ausgabewerte für alle Eingabewerte innerhalb eines vorgegebenen Wertebereichs nichtlinear inter- oder extrapoliert werden. Durch die Verwendung des neuronalen Netzes nach der Erfindung kann außerdem eine Generalisierung erfolgen, d.h. aus fehlerbehafteten Messdaten können allgemeine Trends abgeleitet werden.

Bei dem erfindungsgemäßen neuronalen Netz kann aufgrund seiner Struktur außerdem bestimmtes Expertenwissen über das modellierte physikalische System durch eine Netzstruktur und vordefinierte Wertebereiche miteingebracht werden.

Im folgenden wird die Erfindung an Hand der beiliegenden Figuren beschrieben, die zeigen:

Fig. 1 ein Ausführungsbeispiel eines neuronalen Netzes, das zur erfindungsgemäßen Bildung eines analytischen Modells eines nachzubildenden physikalischen Systems verwendet wird,

Fig. 2 eine Darstellung eines neuronalen Netzes nach dem allgemeinen Stand der Technik.

Das erfindungsgemäße neuronale Netz zur Abbildung einer ein physikalisches System beschreibenden Ausgangsfunktion ist aus miteinander verbundenen Neuronen (2), denen jeweils eine Übergangsfunktion zugeordnet ist, um den aus dieser jeweils ermittelten Ausgangswert dem in Längsrichtung 6 des Netzes 1 funktional als nächsten verbundenen Neuron 2 als Eingangswert zu übertragen. Zur Beschreibung werden die üblicherweise im Zusammenhang mit Neuronalen Netzen verwendeten Begriffe wie Schichten, Neuronen und Verbindungen zwischen den Neuronen verwendet. Dazu soll folgende Nomenklatur verwendet werden:

$o_i$ Ausgabe eines Neurons der vorhergehenden Schicht *i*,
$W_{ij}$ trainierbares Verbindungsgewicht zwischen zwei Schichten *i* und *j*,
$f_j$ Übergangsfunktion eines Neurons der nachfolgenden Schicht *j*.

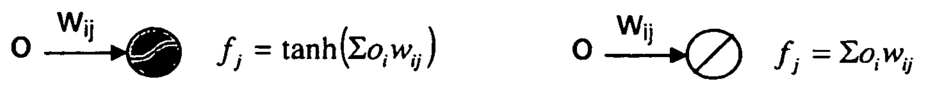


Neuron mit nichtlinearer Übergangsfunktion Neuron mit linearer Übergangsfunktion

Basis des neuronalen Netzes nach der Erfindung sind analytische Gleichungen zur Beschreibung des Systemverhaltens in Abhängigkeit von Eingabewerten. Diese Gleichungen weisen Faktoren und Funktionen unterschiedlicher Dimension auf. Diese Funktionen können linear oder nichtlinear sein. Zur Beschreibung des Systems nach dem erfindungsgemäßen Verfahren mittels eines neuronalen Netzes müssen diese Funktionen und deren Parameter bestimmt werden, wobei Neuronen mit nichtlinearer oder linearer Übergangsfunktion verwendet werden.

Ein Ausführungsbeispiel eines erfindungsgemäß vorgesehenen neuronalen Netzes ist in der Fig. 1 für ein aerodynamisches Modell zur Beschreibung der Längsbewegung eines Flugzeugs dargestellt. Erfindungsgemäß werden mehrschichtige Feedforward Netze (Multi Layer Perceptron) angewendet. Durch die erfindungsgemäße Netzstruktur und durch den modifizierten Optimierungsprozess findet eine Trennung der physikalischen Effekte und eine Zuordnung dieser Effekte in bereitgestellte Gruppen statt. Jede Gruppe repräsentiert einen physikalischen Effekt, und kann nach erfolgtem Training des Gesamtnetzes isoliert analysiert werden. Denn eine Gruppe kann auch aus dem Gesamtnetz herausgelöst werden, und da sie ebenfalls Ein- und Ausgänge besitzt können für beliebige Eingabewerte auch Ausgabewerte der Gruppe berechnet werden.

Ein neuronales Netz nach dem allgemeinen Stand der Technik mit Neuronen mit nichtlinearer Übergangsfunktion zur Nachbildung einer Funktion *f* mit vier Eingangsgrößen *x,y,a,b* ist demgegenüber in Fig. 2 dargestellt. Das dort dargestellte Neuronale Netz 100 weist eine Eingangsschicht 101 mit Eingabeneuronen 101a, 101b, 101x, 101y, ein Ausgabeneuron 104, und eine erste 111 und eine zweite 112 Zwischenschicht auf. Die Zahl der üblicherweise verwendeten Zwischenschichten und der Neuronen beruht auf Erfahrungswerten und hängt von der Komplexität des nachzubildenden Systems ab. Die Neuronen sind bei dem üblichen Ansatz vollständig oder schichtweise miteinander verknüpft. Typischerweise sind die Eingabeneuronen auf der linken Seite und zumindest ein Ausgabeneuron auf der rechten Seite. Neuronen können im allgemeinen eine nichtlineare, z.B. mit der Tangens Hyperbolikus Funktion gebildete, oder eine lineare Übergangsfunktion haben. Die in den Darstellungen verwendeten Neuronen sind im folgenden mit den entsprechenden Darstellungssymbolen dargestellt. Aufgrund seiner vernetzten Struktur können diese Anteile nicht ermitteln bzw. die Systemgleichung nicht nach den Parametern auflösen.

Zur Lösung einer Gleichung zur Beschreibung eines physikalischen System wird erfindungsgemäß ein neuronales Netz mit einer spezifischen Architektur verwendet (siehe Fig. 1). Dabei werden unter Beibehaltung von in Längsrichtung 6 des Netzes 1 gesehen hintereinander angeordneten Zwischenschichten, die im folgenden unter dem Begriff Gruppenschicht 4 zusammengefasst sind, zusätzlich zumindest zwei in Querrichtung 7 angeordnete Gruppen von Neuronen gebildet. Im Gegensatz zum klassischen Ansatz können durch die Bildung von Gruppen die jeweiligen Teilfunktionen isoliert betrachtet werden.

Erfindungsgemäß sind die funktionalen Beziehungen zur Verknüpfung der Neuronen nur innerhalb einer von zumindest zwei in Querrichtung 7 und zwischen einer Eingangsschicht 3 und einer Ausgangsschicht 5 angeordneten Gruppen 21, 22, 23 von Neuronen vorgesehen, wobei die Gruppen 21, 22, 23 zumindest zwei in Längsrichtung 6 hintereinander angeordnete Zwischenschichten 11, 12, 13 mit zumindest einem Neuron aufweisen. Ein Neuron einer Zwischenschicht ist also nur mit einem Neuron einer anderen benachbarten Zwischenschicht über funktionale in Längsrichtung 6 des Netzes 1 verlaufende Beziehungen verbunden, wenn diese Neuronen einer von mehreren in Querrichtung 7 angeordneten Gruppen von jeweils zumindest einem Neuron angehören. Die Neuronengruppen sind also isoliert, d.h. die Neuronen einer Neuronengruppe sind nicht mit den Neuronen einer anderen Neuronengruppe direkt verbunden. Innerhalb einer Neuronengruppe können beliebig viele Zwischenschichten enthalten sein.

Die erfindungsgemäß verwendeten Neuronengruppen weisen mindestens eine Eingangsschicht 3 mit mindestens einem Eingabeneuron (Bezugszeichen x und y; die Bezeichnungen x und y werden auch für die entsprechenden Variablen oder Eingangsgrößen verwendet), und mindestens eine Ausgangsschicht 5 mit mindestens einem Ausgabeneuron 9 auf.

Die Anzahl der erfindungsgemäß zu bildenden Neuronengruppen ist gleich der Anzahl der Teilfunktionen der das nachzubildende System beschreibenden Funktionsgleichung.

Erfindungsgemäß werden bei der erfindungsgemäßen Architektur die Teilfunktions-Koeffizienten in Form von untrainierbaren Eingabeverbindungen hinter der Gruppenschicht integriert. Dadurch wird die Anzahl der Verbindungen und somit auch die Zeit zum Trainieren und Berechnen reduziert. Bei Neuronalen Netzen nach dem Stand der Technik hingegen würde man diese Teilfunktionskoeffizienten in Form von Eingabeneuronen gestalten (Fig. 2).

Die Eingabe- und Ausgabe- Neuronen des Neuronalen Netzes sind vorzugsweise linear, um die Eingabewerte unverändert an die Gruppen weiterzugeben, und um die Ausgaben der Gruppen lediglich zu summieren.

Eine Neuronengruppe wird mit untrainierbaren Verbindungen an die Eingabeneuronen und mit untrainierbaren Eingabeverbindungen an die Ausgabeneuronen des gesamten Neuronalen Netzes angeschlossen. Mit der untrainierbaren Eingabeverbindung kann die Ausgabe einer Neuronengruppe noch mit einem Faktor multipliziert werden (z.B. *f2 (x,y)* multipliziert mit *a* ).

Die untrainierbaren Eingabeverbindungen werden vorteilhafterweise zur Zuordnung von physikalischen Effekten zu bereitgestellten Gruppen verwendet. Diese Verbindungen ermöglichen während des Optimierungsprozesses (Training) die Aufspaltung des berechneten Gesamtfehlers am Netzausgang in die einzelnen Anteile aus den Gruppen. So kann zum Beispiel bei einer Eingabeverbindung mit dem Wert null diese Gruppe keinen Anteil am Gesamtfehler geliefert haben. Folglich wird als rückwärtspropagierter Fehler gemäß dem Backpropagation Algorithmus der Wert null berechnet. Die fehlerabhängige Anpassung der Gewichte innerhalb dieser Gruppe wird somit vermieden. Es werden ausschließlich die Gruppen deren untrainierbare Eingabeverbindungen ungleich null sind angepasst.

Diese Netzarchitektur wird nachfolgend beispielhaft an Hand eines physikalischen Systems mit folgender ma-

thematischer Aproximation beschrieben:

$$(1) \quad f(x,y,a,b) = f1(x,y) + f2(x,y) \cdot a + f3(y) \cdot b$$

Diese Art von Funktion kann zur Beschreibung einer Vielzahl von physikalischen Systemen verwendet werden, beispielsweise zur Beschreibung der in der Gleichung (2) angegebenen Formel für die Längsbewegung (Nickmoment) eines Flugzeugs:

$$(2) \quad C_M = C_{M0}(\alpha,Ma) + C_{M\eta}(\alpha,Ma) \cdot \eta + C_{Mq}(Ma) \cdot q$$

Die Beiwerte sind in der Darstellung der Gleichung (1) die Funktionen *f1, f2* und *f3*, und in der Darstellung der Gleichung (2) die Bezeichnungen $C_{M0}$, $C_{M\eta}$, $C_{Mq}$. Diese einzelnen Beiwerte sind im allgemeinen nichtlinear abhängig vom Anstellwinkel $\alpha$ und gegebenenfalls von der Machzahl *Ma.*

Dabei bedeuten:

| | |
|---|---|
| $C_M$ | Nickmomentenbeiwert; |
| $C_{M0}(\alpha,Ma)$ | Nullmomentenbeiwert, abhängig vom Anstellwinkel $\alpha$ und der Machzahl *Ma;* |
| $C_{M\eta}(\alpha,Ma)$ | Derivativ für den Nickmomentenanstieg infolge Höhenruderausschlag $\eta$; es ist abhängig vom Anstellwinkel $\alpha$ und der Machzahl *Ma,* und muß mit $\eta$ multipliziert werden; |
| $C_{Mq}(Ma)$ | Derivativ für die Nickdämpfung; es ist abhängig von der Machzahl *Ma,* und muss mit der Nickrate *q* multipliziert werden. |

Fig. 1 zeigt ein aufgrund der beispielhaft verwendeten Ausgangsgleichung (1) aus Neuronen 2 gebildetes neuronales Netz 1 mit einer Eingangsschicht 3 und einer Ausgangsschicht 5 sowie mit mehreren, zumindest zwei Gruppen in der Gruppenschicht 4. Innerhalb einer Gruppe ist eine erste 11, eine zweite 12 und eine dritte 13 Zwischenschicht - jede als Bestandteil der Gruppenschicht 4 - angeordnet. Die Zahl der verwendeten Zwischenschichten hängt von der Ordnung der zu approximierenden Funktion ab, mit denen das nachzubildende System mathematisch beschrieben wird. Üblicherweise werden ein bis drei Zwischenschichten verwendet.

Erfindungsgemäß werden in der Gruppenschicht in Querrichtung 7 des Netzes 1 angeordnete Gruppen von Neuronen gebildet, wobei die Anzahl der erfindungsgemäß zu bildenden Neuronengruppen gleich ist der Anzahl der Teilfunktionen der das nachzubildende System beschreibenden Funktionsgleichung. Bei der Gleichung (1) bzw. der Gleichung (2) als deren Spezialisierung sind dies drei Teilfunktionen. Demgemäss sind in der Ausführungsform der Fig. 1 drei Neuronengruppen 21, 22, 23 vorgesehen. Auf diese Weise können durch die Bildung von in Querrichtung angeordneten Gruppen die jeweiligen Teilfunktionen,
also im Beispiel der Gleichung (1) die Funktionen *f1, f2* und *f3*, isoliert betrachtet werden. Dazu wird die erste Zwischenschicht 11 als Eingangsschicht und die letzte Zwischenschicht 13 als Ausgangsschicht verwendet.

Die Teilfunktions-Koeffizienten sind in dem für die Gleichung (1) gebildeten Neuronalen Netz der Fig.1 die Koeffizienten 1, a und b und sind in Form von untrainierbaren Eingabeverbindungen 8b in das Gesamtnetz integriert; d.h. die Verbindungen zwischen der letzten Zwischenschicht 13 einer Gruppe und der Ausgangsschicht 5 werden mit den Funktionskoeffizienten beaufschlagt. Dadurch wird die Anzahl der Verbindungen und somit auch die Zeit zum Trainieren und Berechnen reduziert. Die Ein- und Ausgabe-Neuronen der Gruppen, also der Eingangs- 3 und der Ausgangsschicht 5 sollten vorzugsweise linear sein, um die Eingabewerte unverändert an die Neuronen der Zwischenschichten 11, 12, 13 weiterzugeben, und um die Ausgabewerte der Neuronengruppen lediglich zu summieren.

Die erfindungsgemäß verwendeten Neuronengruppen 21, 22, 23 weisen eine erste Zwischenschicht oder Eingangs-Zwischenschicht 11 der Gruppenschicht 4 mit mindestens einem Eingabeneuron 31a bzw. 32a, 32b bzw. 33a, 33b auf. Eine letzte Zwischenschicht oder Ausgangs-Zwischenschicht 13 weist mindestens ein Ausgabeneuron 31c bzw. 32b bzw. 33c auf. Die aufgrund der Zusammenhänge in Querrichtung 7 zueinander unabhängigen Neuronengruppen 21, 22, 23 sind isoliert voneinander, d.h. die Neuronen einer Neuronengruppe sind nicht direkt mit den Neuronen einer anderen Neuronengruppen verbunden. Dies gilt nicht für die Anbindung an die Eingangsschicht 3 und die Ausgangsschicht 5. Innerhalb einer Neuronengruppe können beliebig viele Zwischenschichten enthalten sein. In dem Ausführungsbeispiel der Fig. 1 sind drei Zwischenschichten 11,12,13 angeordnet. Das bedeutet, dass erfindungsgemäß die Verknüpfungen der Neuronen nur innerhalb einer von zumindest zwei in Querrichtung 7 und zwischen einer Eingangsschicht 3 und einer

Ausgangsschicht 5 angeordneten Gruppen 21, 22, 23 von Neuronen vorgesehen sind. Jede Gruppe 21, 22,

23 weist zumindest zwei in Längsrichtung 6 hintereinander angeordnete Zwischenschichten 11, 12, 13 mit zumindest einem Neuron auf. Ein Neuron einer Zwischenschicht ist also nur mit einem Neuron einer anderen benachbarten Zwischenschicht über in Längsrichtung 6 des Netzes 1 verlaufende Beziehungen verbunden, wenn diese Neuronen einer von mehreren in Querrichtung 7 angeordneten Gruppen von jeweils zumindest einem Neuron angehören.

Mit dem erfindungsgemäß verwendeten Neuronalen Netz können anhand der Netzwerkparameter (Verbindungsgewichte) die internen Terme *f1, f2, f3* der beispielhaft verwendeten Gleichung (1) bzw. $C_{M0}(\alpha,Ma)$, $C_{M\eta}(\alpha,Ma)$, $C_{Mq}(Ma)$ der spezielleren Gleichung (2) ermittelt werden, um das Modell auf sein korrektes Verhalten bei untrainierten Eingabewerten zu überprüfen. Zum Beispiel sollte bei der Gleichung (2) der Term $C_{Mq}(Ma)$ immer negativ sein, da er die Dämpfung des Systems darstellt. Diese Analysemöglichkeiten werden durch die Architektur des erfindungsgemäß verwendeten Neuronalen Netzes erreicht (siehe Fig. 1).

Im folgenden wird das erfindungsgemäße Verfahren zur Einstellung oder Definition des erfindungsgemäßen neuronalen Netzes beschrieben:

Zur Bildung von Modellen dynamischer Systeme werden analytische Gleichungen zur Beschreibung des Systemverhaltens in Abhängigkeit von Eingabewerten aufgestellt. Ein Beispiel einer solchen Gleichung ist voranstehend in der Gleichung (1) formuliert. Diese Gleichungen weisen Faktoren und Funktionen unterschiedlicher Dimension auf. Diese Funktionen können linear oder nichtlinear sein. In einem weiteren Schritt des erfindungsgemäßen Verfahrens müssen diese Funktionen und deren Parameter zur Beschreibung des zu modellierenden Systems bestimmt werden. Danach wird die Struktur des neuronalen Netzes nach den voranstehen beschriebenen Kriterien erstellt. Ein Ausführungsbeispiel eines erfindungsgemäß verwendeten neuronalen Netzes ist in der Fig. 1 für ein aerodynamisches Modell zur Beschreibung der Längsbewegung eines Flugzeugs dargestellt. Die Architektur des neuronalen Netzes 1 wird analog zur mathematischen Funktion *f(x,y,a,b)* gestaltet, wobei untrainierbaren Verbindungen 8a zwischen der Eingangsschicht und der ersten Gruppen-Schicht 11 und untrainierbare Eingabeverbindungen 8b zwischen der letzten Gruppen-Schicht 13 und der Ausgangsschicht 5 vorgesehen sind.

Danach wird eine Trainingsphase zur Anpassung des Netzes an das nachzubildende System durchgeführt. Dazu werden die Ein- und Ausgabegrößen des Systems (hier: Flugzeug) gemessen. Für das aerodynamische Beispiel werden die flugmechanischen Größen $\alpha$, $Ma$, $\eta$, $q$ und $C_M$ gemessen bzw. mit flugmechanischen Formeln berechnet. Aus den Messdaten wird ein Trainingsdatensatz für das neuronale Netz erstellt, bestehend aus mehreren Wertepaaren mit jeweils vier Eingabewerten ($\alpha$, $Ma$, $\eta$, $q$) und einem Ausgabewert ($C_M$). Beim Lernvorgang können iterative Verfahren angewendet werden, z.B. die Methode des Gradientenabstiegs (Backpropagation). Dabei werden zur Optimierung des Neuronalen Netzes die trainierbaren Verbindungsgewichte $w_{ij}$ (dargestellt als Pfeile) üblicherweise so angepasst, dass für alle Messdaten das Neuronale Netz die bestmögliche passende Ausgabe liefert.

Danach wird ein Optimierungsverfahren mit Hilfe des Trainingsdatensatzes durchgeführt zur Einstellung der Verbindungsgewichte des neuronalen Netzes. Dadurch können die Anteile *f1, f2* und *f3* ausschließlich in den dafür vorgesehenen Gruppen abgebildet werden.

Vor der Optimierung können alle Verbindungsgewichte auf Zufallswerte, vorzugsweise im Intervall [-1.0;+1.0], gesetzt werden. Wenn Vorgabewerte für die Terme *f1, f2* und *f3* existieren, können die Gruppen auch individuell vortrainiert werden. Dazu muss eine Gruppe als abgeschlossenes Neuronales Netz betrachtet werden, und der Optimierungsalgorithmus auf diese Gruppe alleine angewendet werden.

Die Optimierung der Verbindungsgewichte gemäß dem bekannten Backpropagation Algorithmus erfolgt in mehreren Schritten:

- Die Werte für die Eingänge des Netzwerks werden aus dem Trainingsdatehsatz übernommen. Im Schritt 1 müssen nun neben den Neuronen in der Eingangsschicht 3 zusätzlich die Eingabeverbindungen 8b auf die Eingabewerte aus dem Trainingsdatensatz gesetzt werden.

- Das Netzwerk wird beginnend von der Eingangsschicht bis zur Ausgangsschicht berechnet. Dazu wird die Aktivierung jedes Neurons abhängig von den Vorgängerneuronen und den Verbindungen berechnet.

- Die Aktivierung des Ausgabeneurons wird mit dem Sollwert aus dem Trainingsdatensatz verglichen. Aus der Differenz wird der Netzwerkfehler berechnet.

- Aus dem Netzwerkfehler wird schichtweise von hinten nach vorne der Fehler an jedem Neuron berechnet, wobei die Verbindungen auch als Eingänge fungieren können.

- Abhängig von dem Fehler eines Neurons und dessen Aktivierung wird eine Gewichtsänderung der Verbindungen zu den benachbarten Neuronen berechnet, wobei die Verbindungen auch als Eingänge fungieren können.

- Abschließend werden die Gewichtsänderungen zu den jeweiligen Verbindungsgewichten addiert, wobei die Gewichtsänderungen auf die untrainierbaren Verbindungen 8a und die untrainierbaren Eingabeverbindungen 8b nicht addiert werden.

Nach erfolgreichem Training des neuronalen Netzes kann jede Gruppe *f1, f2* und *f3* dadurch analysiert werden, dass eine Gruppe isoliert betrachtet wird. Denn jede Gruppe lässt sich wie ein abgeschlossenes neuronales Netz betrachten. Entsprechend kann ein Eingabewert y für das Neuron 31a gewählt werden und dann diese Gruppe bis zu seinem Ausgabeneuron 31 c berechnet werden. Das Ausgabeneuron 31 c der Gruppe 21 enthält dann den Funktionswert *f3(y)*.

Für das Beispiel Aerodynamik heißt das:

Die internen Anteile $C_{M0}(\alpha,Ma)$, $C_{M\eta}(\alpha,Ma)$ und $C_{Mq}(Ma)$ können nach dem Berechnen des neuronalen Netzes 1 an den Ausgabeneuronen 31c, 32c, 33c der drei Neuronengruppen abgelesen werden.

Die beschriebenen Verfahren, insbesondere die Verfahren zum Training und zur Optimierung des erfindungsgemäßen neuronalen Netzes, sind insbesondere zur Implementierung auf einem Computer-Programmsystem vorgesehen.

## Patentansprüche

1. Neuronales Netz zur Abbildung einer ein physikalisches System mit Eingabewerten beschreibenden Funktionsgleichung mit einer bekannten Anzahl von Teilfunktionen (f1, f2, f3), wobei das neuronale Netz aus miteinander verbundenen Neuronen (2) gebildet ist, denen jeweils eine Übergangsfunktion zugeordnet ist, um dessen Ausgangswert dem in Längsrichtung (6) des Netzes (1) als nächsten verbundenen Neuron (2) als Eingangswert zu übertragen, wobei die Verknüpfungen der Neuronen nur innerhalb einer von zumindest zwei in Querrichtung (7) und zwischen einer Eingangsschicht (3) und einer Ausgangsschicht (5) angeordneten Gruppen (21, 22, 23) von Neuronen vorgesehen sind, wobei die Gruppen (21, 22, 23) zumindest zwei in Längsrichtung (6) hintereinander angeordnete Zwischenschichten (11, 12, 13) mit zumindest einem Neuron aufweisen,

   - wobei die Zahl der Neuronengruppen gleich ist der Anzahl der Teilfunktionen der das nachzubildende System beschreibenden Funktionsgleichung,
   - wobei die Übertragungsfunktionen der Eingabe-Neuronen (x, y) und der Ausgabe-Neuronen (9) des Neuronalen Netzes linear sind;

   **dadurch gekennzeichnet,**

   - **dass** eine Neuronengruppe mit untrainierbaren Verbindungen an die Eingabeneuronen und mit untrainierbaren Eingabeverbindungen an die Ausgabeneuronen des gesamten Neuronalen Netzwerkes angeschlossen ist, wobei die Gewichte der Eingabeverbindungen (8b) zwischen den Gruppen und den Ausgabeneuronen diejenigen Eingabewerte des physikalischen Systems sind, die als Teilfunktions-Koeffizienten (a, b) der Teilfunktionen (f1, f2, f3) verwendet werden.

2. Neuronales Netz nach Anspruch 1, **dadurch gekennzeichnet, dass** das neuronale Netz zur Erstellung eines Simulationsmodells verwendet wird.

3. Neuronales Netz nach einem der Ansprüche 1 oder 2, **dadurch gekennzeichnet, dass** das Neuronale Netz analysiert wird, indem eine Gruppe als isoliertes neuronales Netz betrachtet wird, wobei die erste Zwischenschicht (11) dann zur Eingangsschicht, und die letzte Zwischenschicht (13) zur Ausgangsschicht wird.

4. Neuronales Netz nach einem der voranstehenden Ansprüche 1, 2 oder 3, **dadurch gekennzeichnet, dass** der Wertebereich einer Gruppe durch eine geeignete Wahl der Übergangsfunktion des Ausgabeneurons einer Gruppe definiert werden kann.

5. Zur Implementierung auf einem Computer-Programmsystem vorgesehenes Optimierungsverfahren zur Einstellung der Verbindungsgewichte eines neuronalen Netzes zwischen Eingabeneuronen und Ausgabeneuronen, das zur Abbildung einer ein physikalisches System mit Eingabewerten beschreibenden Funktionsgleichung mit einer bekannten Anzahl von Teilfunktionen (f1, f2, f3) vorgesehen ist, wobei eine Neuronengruppe mit untrainierbaren Verbindungen an die Eingabeneuronen und mit untrainierbaren Eingabeverbindungen (8b) an die Ausgabeneuronen

des gesamten Neuronalen Netzwerkes angeschlossen ist,

- wobei trainierbare Verbindungsgewichte derart angepasst werden, dass das Neuronale Netz für alle Messdaten eine optimale Ausgabe liefert,
- wobei die Verknüpfungen der Neuronen des neuronalen Netzes nur innerhalb einer von zumindest zwei in Querrichtung (7) und zwischen einer Eingangsschicht (3) und einer Ausgangsschicht (5) angeordneten Gruppen (21, 22, 23) von Neuronen vorgesehen sind, wobei die Gruppen (21, 22, 23) zumindest zwei in Längsrichtung (6) hintereinander angeordnete Zwischenschichten (11, 12, 13) mit zumindest einem Neuron aufweisen,

mit folgenden Schritten:

- Setzen der Verbindungsgewichte auf Zufallswerte;
- Übernahme der Werte für die Eingänge des Netzwerks aus einem Trainingsdatensatz,
- Überschreiben der Eingabeneuronen mit diesen Werten ,
- Berechnung des Netzes von der Eingangsschicht bis zur Ausgangsschicht, wobei die Aktivierung jedes Neurons abhängig von den Vorgängerneuronen und den Verbindungen berechnet wird,
- Vergleich der Aktivierung des Ausgabeneurons mit dem Sollwert aus dem Trainingsdatensatz und Berechnung des Netzwerkfehlers aus der Differenz,
- schichtweise Berechnung des Fehlers an jedem Neuron aus dem Netzwerkfehler entgegen der Längsrichtung (6),
- Berechnung der Gewichtsänderung der Verbindungen zu den benachbarten Neuronen abhängig von dem Fehler eines Neurons und dessen Aktivierung,

**dadurch gekennzeichnet,**

- **dass** anschließend eine Addition der Gewichtsänderungen ausschließlich zu den Verbindungsgewichten der Neuronengruppen erfolgt;
- **dass** zusätzlich zu dem Überschreiben der Eingabeneuronen ein Überschreiben der untrainierbaren Eingabeverbindungen (8b) zwischen der Ausgangsschicht (5) und den Ausgabeneuronen (9) erfolgt und die Gewichte der Verbindungen (8b) diejenigen Eingabewerte des physikalischen Systems sind, die als Teilfunktions-Koeffizienten (a, b) der Teilfunktionen (f1, f2, f3) verwendet werden.

**6.** Zur Implementierung auf einem Computer-Programmsystem vorgesehenes Analyseverfahren zur Überwachung eines Optimierungsverfahrens nach dem Anspruch 5,
**dadurch gekennzeichnet, dass**
eine Gruppe als isoliertes neuronales Netz betrachtet wird, wobei die erste Zwischenschicht (11) dann zur Eingangsschicht, und die letzte Zwischenschicht (13) zur Ausgangsschicht wird.

**7.** Optimierungsverfahren nach Anspruch 5, **dadurch gekennzeichnet, dass** eine Gruppe isoliert trainiert werden kann, indem mit Hilfe eines Trainingsdatensatzes und einem Optimierungsverfahren nur die Verbindungsgewichte einer Gruppe modifiziert werden.

**8.** Optimierungsverfahren nach Anspruch 5, **gekennzeichnet dadurch, dass** die Methode des Gradientenabstiegs angewendet wird.

**9.** Optimierungsverfahren nach Anspruch 5, **dadurch gekennzeichnet, dass** die Verbindungsgewichte auf Zufallswerte im Intervall [-1.0;+1.0], gesetzt werden.

## Claims

**1.** Neural network for modelling a functional equation which describes a physical system having input values and which has a known number of sub-functions (*f1, f2, f3),* wherein the neural network is formed by neurons (2) which are linked to one another and to each of which is assigned a transfer function in order to transfer its output value as an input value to the neuron (2) which is linked next in the longitudinal direction (6) of the network (1), wherein the links of the neurons are provided only within one of at least two groups (21, 22, 23) of neurons which are disposed in the transverse direction (7) and between an input layer (3) and an output layer (5), wherein the groups (21, 22, 23) have at least two intermediate layers (11, 12, 13), each having at least one neuron, disposed one after the other in the

longitudinal direction (6),

- wherein the number of neuron groups is equal to the number of sub-functions of the functional equation which describes the system to be simulated,
- wherein the transfer functions of the input neurons (*x*, *y*) and of the output neurons (9) of the neural network are linear;

**characterised in that**

- a group of neurons is connected by untrainable links to the input neurons and by untrainable input links to the output neurons of the entire neural network, wherein the weights of the input links (8b) between the groups and the output neurons are those input values of the physical system which are used as sub-function coefficients (*a,b*) of the sub-functions (*f1, f2, f3*).

**2.** Neural network according to claim 1, **characterised in that** the neural network is used to set up a simulation model.

**3.** Neural network according to either claim 1 or 2, **characterised in that** the neural network is analysed by considering one group as an isolated neural network, wherein the first intermediate layer (11) then becomes the input layer and the last intermediate layer (13) becomes the output layer.

**4.** Neural network according to any one of claims 1, 2 or 3, **characterised in that** the value range of a group can be defined by a suitable choice of the transfer function of the output neuron of a group.

**5.** Method of optimisation provided for implementation in a computer program system for adjustment of the link weights of a neural network between input neurons and output neurons which is provided for modelling a functional equation which describes a physical system with input values and which has a known number of sub-functions *(f1, f2, f3),* wherein a group of neurons is connected by untrainable links to the input neurons and by untrainable input links (8b) to the output neurons of the entire neural network,

- wherein trainable link weights are adapted in such a way that the neural network supplies an optimal output for all measured data,
- wherein the links of the neurons of the neural network are provided only within one of at least two groups (21, 22, 23) of neurons which are disposed in the transverse direction (7) and between an input layer (3) and an output layer (5), wherein the groups (21, 22, 23) have at least two intermediate layers (11, 12, 13), each having at least one neuron, disposed one after the other in the longitudinal direction (6),

having the following steps:

- setting of the link weights to random values;
- adoption of the values for the inputs of the network from a training data set,
- overwriting of the input neurons with these values,
- calculation of the network from the input layer to the output layer, wherein the activation of each neuron is calculated in dependence on the precursor neurons and the links,
- comparison of the activation of the output neuron with the desired value from the training data set and calculation of the network error from the difference,
- calculation in layers of the error at each neuron from the network error counter to the longitudinal direction (6),
- calculation of the weight change in the links to the adjacent neurons in dependence on the error of one neuron and its activation,

**characterised in that**

- an addition of solely the weight changes to the link weights of the neuron groups then takes place;
- in addition to the overwriting of the input neurons an overwriting of the untrainable input links (8b) between the output layer (5) and the output neurons (9) takes place and the weights of the links (8b) are the input values of the physical system which are used as sub-function coefficients (*a,b*) of the sub-functions (*f1, f2, f3*).

**6.** Method of analysis provided for implementation in a computer program system for monitoring a method of optimisation according to claim 5,

**characterised in that**
one group is considered as an isolated neural network, wherein the first intermediate layer (11) then becomes the input layer and the last intermediate layer (13) becomes the output layer.

**7.** Method of optimisation according to claim 5, **characterised in that** one group can be trained in isolation, **in that** only the link weights of a group are modified with the aid of a training data set and a method of optimisation.

**8.** Method of optimisation according to claim 5, **characterised in that** the method of descent by degree is used.

**9.** Method of optimisation according to claim 5, **characterised in that** the link weights are set to random values within the range [-1.0; +1.0].

## Revendications

**1.** Réseau neuronal pour la modélisation d'une équation fonctionnelle décrivant un système physique avec des valeurs d'entrée, comprenant un nombre connu de fonctions partielles (f1, f2, f3), moyennant quoi le réseau neuronal est constitué de neurones (2) reliés entre eux auxquels est associée une fonction de transfert afin de transmettre leur valeur de sortie au neurone (2) suivant dans la direction longitudinale (6) du réseau (1) en tant que valeur d'entrée, moyennant quoi les connexions des neurones ne sont prévues que dans un parmi au moins deux groupes (21, 22, 23) de neurones disposés dans la direction transversale (7) et entre une couche d'entrée (3) et une couche de sortie (5), moyennant quoi les groupes (21, 22, 23) comprennent au moins deux couches intermédiaires (11, 12, 13), avec au moins un neurone, disposées les unes derrière les autres dans la direction longitudinale (6),

- moyennant quoi le nombre de groupes de neurones est égal au nombre de fonctions partielles de l'équation fonctionnelle décrivant le système à modéliser,
- moyennant quoi les fonctions de transfert des neurones d'entrée (x, y) et des neurones de sortie (9) du réseau neuronal sont linéaires ;

**caractérisé en ce que**

- un groupe de neurones est relié avec des connexions non adaptatives aux neurones d'entrée et avec des connexions d'entrée non adaptatives aux neurones de sortie de l'ensemble du réseau neuronal, moyennant quoi les pondérations des connexions d'entrée (8b) entre les groupes et les neurones de sortie sont les valeurs d'entrée du système physique qui sont utilisées en tant que coefficients (a, b) des fonctions partielles (f1, f2, f3).

**2.** Réseau neuronal selon la revendication 1, **caractérisé en ce que** le réseau neuronal est utilisé pour la réalisation d'un modèle de simulation.

**3.** Réseau neuronal selon l'une des revendications 1 ou 2, **caractérisé en ce que** le réseau neuronal est analysé en considérant un groupe en tant que réseau neuronal isolé, moyennant quoi la première couche intermédiaire (11) devient alors la couche d'entrée et la dernière couche intermédiaire (13) devient la couche de sortie.

**4.** Réseau neuronal selon l'une des revendications précédentes 1, 2 ou 3, **caractérisé en ce que** le domaine de valeurs d'un groupe peut être défini à l'aide d'une sélection appropriée de la fonction de transfert du neurone de sortie d'un groupe.

**5.** Procédé d'optimisation prévu pour une implémentation sur un système à programme informatique pour le réglage des pondérations des connexions d'un réseau neuronal entre des neurones d'entrée et des neurones de sortie, qui est prévu pour la modélisation d'une équation fonctionnelle décrivant un système physique avec des valeurs d'entrée, comprenant un nombre connu de fonctions partielles (f1, f2, f3), moyennant quoi un groupe de neurones est relié avec des connexions non adaptatives aux neurones d'entrée et avec des connexions d'entrée (8b) non adaptatives aux neurones de sortie de l'ensemble du réseau neuronal,

- moyennant quoi les pondérations des connexions adaptatives sont adaptées de façon à ce que le réseau neuronal délivre une sortie optimale pour toutes les données de mesure,
- moyennant quoi les connexions des neurones ne sont prévues que dans un parmi au moins deux groupes (21, 22, 23) de neurones disposés dans la direction transversale (7) et entre une couche d'entrée (3) et une

couche de sortie (5), moyennant quoi les groupes (21, 22, 23) comprennent au moins deux couches intermédiaires (11, 12, 13), avec au moins un neurone, disposées les unes derrière les autres dans la direction longitudinale (6),

comprenant les étapes suivantes :

- détermination des pondérations des connexions avec des valeurs aléatoires ;
- prise en compte des valeurs pour les entrées du réseau provenant d'un ensemble de données d'apprentissage ;
- écriture des valeurs dans ces neurones d'entrée ;
- calcul du réseau de la couche d'entrée à la couche de sortie, moyennant quoi l'activation de chaque neurone est calculée indépendamment des neurones précédents et des connexions ;
- comparaison de l'activation du neurone de sortie avec la valeur de consigne provenant de l'ensemble de données d'apprentissage et calcul de l'erreur du réseau à partir de la différence ;
- calcul par couches de l'erreur au niveau de chaque neurone à partir de l'erreur du réseau dans la direction longitudinale (6) ;
- calcul de la modification des pondérations des connexions avec les neurones voisins indépendamment de l'erreur d'un neurone et de son activation

**caractérisé en ce que**

- une addition des modifications des pondérations est réalisée exclusivement sur les pondérations de connexion des groupes de neurones ;
- en plus de l'écriture dans les neurones d'entrée, une écriture dans les connexions d'entrée (8b) entre la couche de sortie (5) et les neurones de sortie (9) est réalisée et les pondérations des connexions (8b) sont les valeurs d'entrée du système physique qui sont utilisées en tant que coefficients (a, b) des fonctions partielles (f1, f2, f3).

**6.** Procédé d'analyse prévu pour une implémentation sur un système à programme informatique pour la surveillance d'un procédé d'optimisation selon la revendication 5,
**caractérisé en ce que**
un groupe est considéré comme un réseau neuronal isolé, moyennant quoi la première couche intermédiaire (11) devient la couche d'entrée et la dernière couche intermédiaire (13) devient la couche de sortie.

**7.** Procédé d'optimisation selon la revendication 5, **caractérisé en ce qu'**un groupe peut être formé de manière isolée en modifiant, à l'aide d'un ensemble de données d'apprentissage et d'un procédé d'optimisation, seulement les pondérations de connexions d'un groupe.

**8.** Procédé d'optimisation selon la revendication 5, **caractérisé en ce que** la méthode de la rétropropagation du gradient est utilisée.

**9.** Procédé d'optimisation selon la revendication 5, **caractérisé en ce que** les pondérations des connexions sont réglées à des valeurs aléatoires comprises dans l'intervalle [-1, 0 ; +1, 0] .

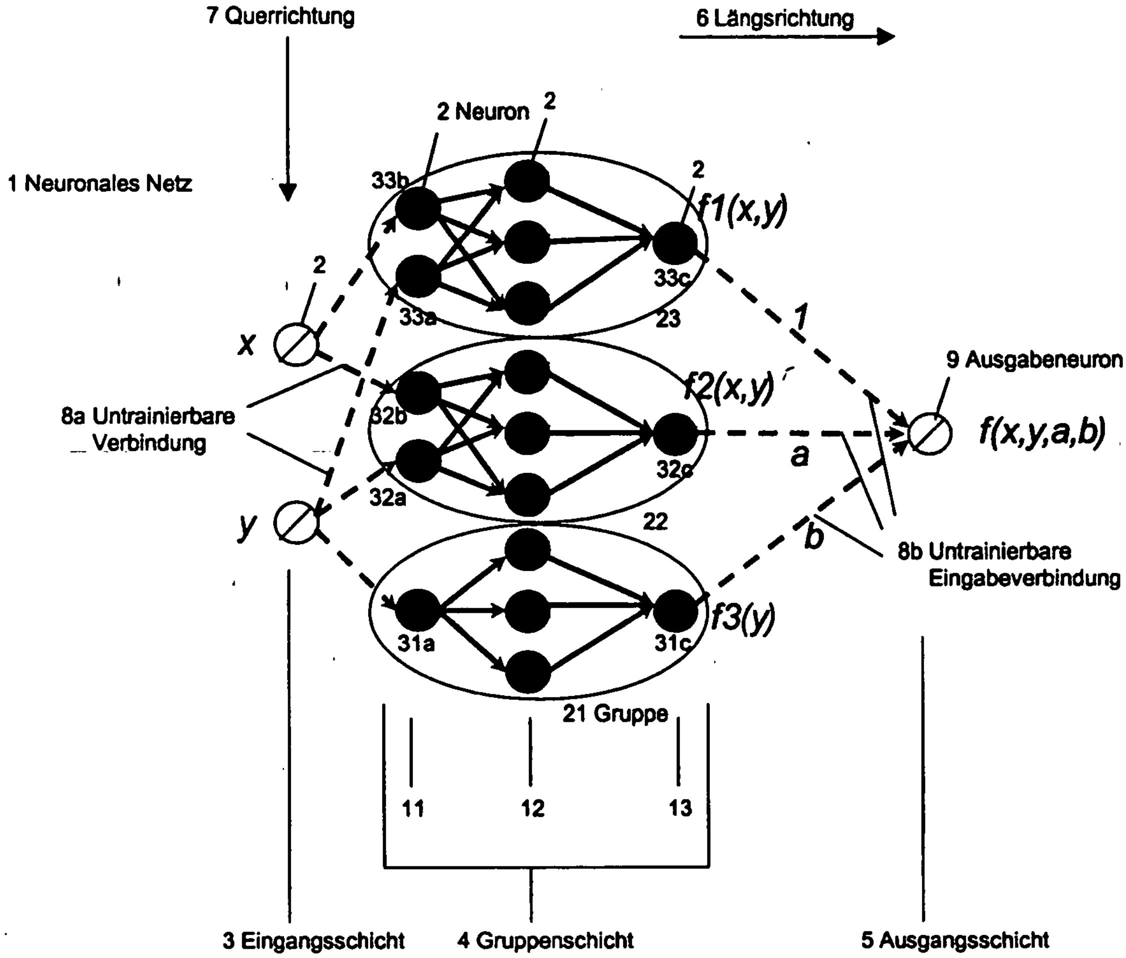
7 Querrichtung
6 Längsrichtung
2 Neuron
2
1 Neuronales Netz
33b
2
f1(x,y)
2
33c
33a
23
1
x
9 Ausgabeneuron
8a Untrainierbare
Verbindung
f2(x,y)
32b
f(x,y,a,b)
a
32c
32a
y
22
b
8b Untrainierbare
Eingabeverbindung
f3(y)
31a
31c
21 Gruppe
11
12
13
3 Eingangsschicht
4 Gruppenschicht
5 Ausgangsschicht

Figur 1

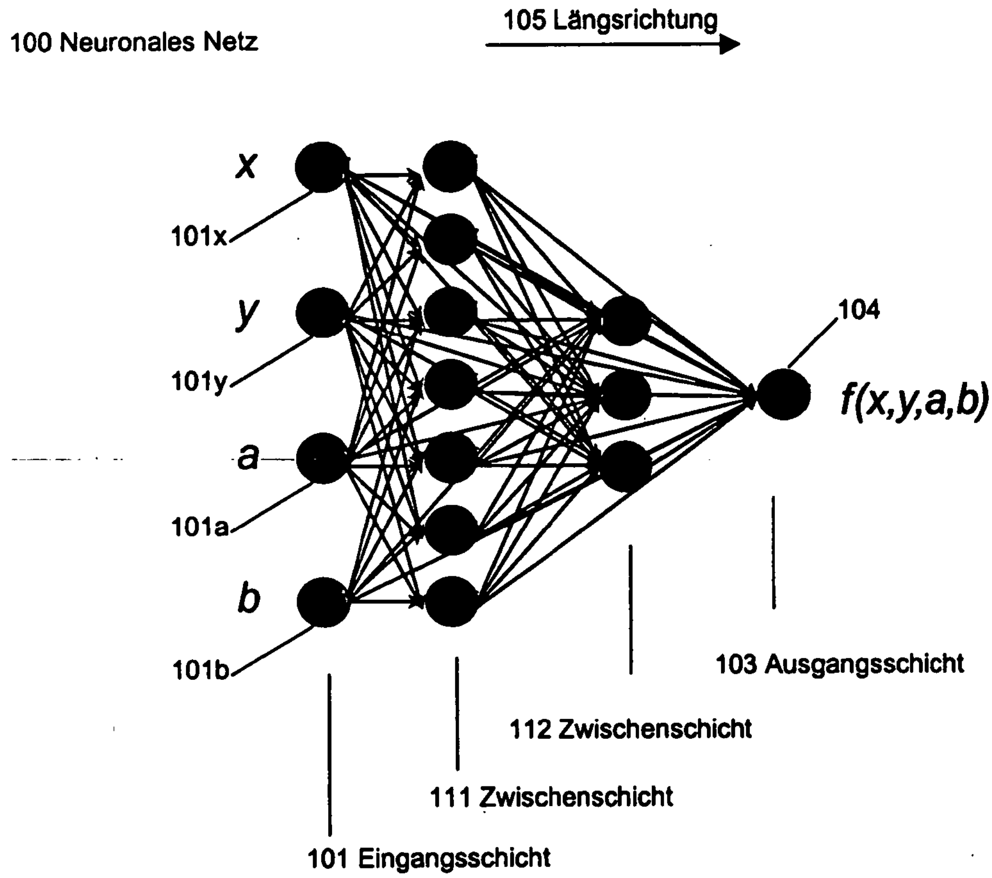
100 Neuronales Netz
105 Längsrichtung
x
101x
y
101y
a
101a
b
101b
104
f(x,y,a,b)
103 Ausgangsschicht
112 Zwischenschicht
111 Zwischenschicht
101 Eingangsschicht

Figur 2